# EUROPÄISCHE PATENTANMELDUNG

(11) **EP 1 092 950 A1**
(43) Veröffentlichungstag der Anmeldung: **18.04.2001**
(21) Anmeldenummer: 00120432.0
(22) Anmeldetag: 19.09.2000
(51) Int. Cl.: G01C 21/34

(54) **Verfahren zur Bestimmung einer Fahrtroute für ein Strassenfahrzeug**

(30) Priorität: 05.10.1999 DE 19947789
(71) Anmelder: Mannesmann VDO Aktiengesellschaft, 60388 Frankfurt am Main (DE)
(72) Erfinder: Völkel, Andreas, 35619 Braunfels (DE)
(74) Vertreter: Klein, Thomas, Dipl.-Ing. (FH)

(57) **Zusammenfassung**

Es wird ein Verfahren zur Bestimmung einer Fahrtroute für ein Straßenfahrzeug zwischen einem Start- (S) und einem Zielort (Z) vorgeschlagen, bei dem mindestens zwei Datenbanken mit Landkartendaten zu benachbarten geographischen Gebieten in die Berechnung einbezogen werden. Das Verfahren kann beispielsweise dann eingesetzt werden, wenn der Start- (S) und der Zielort (Z) in verschiedenen Ländern (A, B) liegen, für die die Landkartendaten in verschiedenen Datenbanken abgespeichert sind. Erfindungsgemäß werden gemeinsame Grenzpunkte (G1, G2, G3) bestimmt und die Routenberechnung zwischen dem Start- (S) bzw. Zielort (Z) und diesen Grenzpunkten (G1, G2, G3) vorgenommen. Anschließend erfolgt die Auswahl der optimalen Route.

## Beschreibung

Die Erfindung betrifft ein Verfahren zur Bestimmung einer Fahrtroute für ein Straßenfahrzeug zwischen einem Start- und einem Zielort unter Einbeziehung von mindestens zwei Datenbanken mit Landkartendaten. Weiterhin betrifft die Erfindung ein Navigationssystem eines Kraftfahrzeuges mit einer Recheneinheit zur Berechnung einer Route zwischen einem Start- und einem Zielort, einem mit der Recheneinheit verbundenen Lesegerät zum Auslesen von Landkartendaten aus einem Datenträger, Mitteln zur Bestimmung der Fahrzeugposition, einer mit der Recheneinheit verbundenen Eingabeeinheit und einer mit der Recheneinheit verbundenen Ausgabeeinheit.

Derartige Navigationssysteme sind bekannt und werden in Kraftfahrzeugen eingesetzt. Als Datenträger für die Landkartendaten dienen in der Regel CD-ROMs, so daß es sich bei dem Lesegerät um ein CD-Laufwerk handelt. Auf einer CD-ROM sind die Landkartendaten eines geographisch begrenzten Gebietes abgespeichert. Zumeist handelt es sich um die Landkartendaten eines bestimmten Landes. Ein Kraftfahrer, der über die Landesgrenzen hinausfährt, muß daher bei Überschreiten der Landesgrenze die CD-ROM wechseln, um weiterhin Zielführungsinformationen bis zu seinem gewünschten Zielort zu erhalten.

Es sind auch bereits Systeme bekannt, die neben den Landkartendaten eines europäischen Landes auch das Fernstraßennetz von Europa enthalten. Wird hierbei das Land, das den Startort enthält, verlassen, so steht für die weitere Zielführung somit nur noch das Fernstraßennetz zur Verfügung. Dies hat zum einen zur Folge, daß eine Zielführung über Nebenstraßen, beispielsweise im Falle von Verkehrsbehinderungen auf den Fernstraßen, nicht möglich ist und weiterhin die Zielführung nur bis zu der dem Zielort nächstgelegenen Fernstraßenausfahrt möglich ist.

Aus der US 5,412,573 ist ein Navigationssystem bekannt, das mehrere Datenbanken in die Zielführung einbezieht. Hierbei handelt es sich jedoch einerseits um Datenbanken, die vollständige Informationen zur Zielführung enthalten, und andererseits um Datenbanken, die lediglich das Straßennetz ohne die für eine Zielführung erforderlichen Zusatzinformationen enthalten. Bei diesem bekannten System erfolgt daher eine Zielführung in bekannter Weise solange entsprechende Datenbankinformationen vorliegen und ein Umschalten in einen reinen Landkartenanzeigemodus, sobald ein Gebiet erreicht wird, zu dem eine Datenbank mit unvollständigen Informationen vorliegt.

Aufgabe der Erfindung ist es, ein Verfahren zur Bestimmung einer Fahrtroute für ein Straßenfahrzeug zwischen einem Start- und einem Zielort anzugeben, wobei der Start- und Zielort in unterschiedlichen Datenbanken abgespeichert sind. Weiterhin ist es Aufgabe der Erfindung, ein Navigationssystem anzugeben, mit dem ein solches Verfahren besonders vorteilhaft ausgeführt werden kann.

Die erstgenannte Aufgabe wird gelöst durch ein Verfahren zur Bestimmung einer Fahrtroute für ein Straßenfahrzeug zwischen einem Start- und einem Zielort unter Einbeziehung von mindestens zwei Datenbanken mit Landkartendaten zu benachbarten geographischen Gebieten durch Bestimmen von gemeinsamen Grenzpunkten von Datenbanken zu benachbarten geographischen Gebieten, Berechnen von ersten Teilrouten zwischen dem Startort und den gemeinsamen Grenzpunkten mit den Landkartendaten einer ersten Datenbank, die den Startort enthält, Abspeichern von Routenparametem zu den ersten Teilrouten, Berechnen von zweiten Teilrouten zwischen dem Zielort und den gemeinsamen Grenzpunkten mit den Landkartendaten einer zweiten Datenbank, die den Zielort enthält, Abspeichern von Routenparametern zu den zweiten Teilrouten, Auswählen einer Route zwischen dem Start- und Zielort anhand von Routenparametern der Gesamtroute, die sich aus Routenparametern der Teilrouten ergeben.

Mit dem erfindungsgemäßen Verfahren werden somit zunächst die Übergangsstellen (Grenzpunkte) von benachbarten geographischen Gebieten, deren Landkartendaten in verschiedenen Datenbanken abgespeichert sind, ermittelt. Decken die Datenbanken, die den Startort bzw. den Zielort enthalten, geographische Gebiete ab, die direkt aneinander grenzen, so ist es beispielsweise ausreichend nur einen Satz von Grenzpunkten zu bestimmen. In diesem Fall erfolgt eine Berechnung von ersten Teilrouten zwischen dem Startort und diesen Grenzpunkten und eine zweite Berechnung von Teilrouten zwischen dem Zielort und diesen Grenzpunkten. In beiden Fällen werden Routenparameter zu den Teilrouten abgespeichert und anhand der Routenparameter wird die optimale Route zwischen dem Start- und Zielort ermittelt. Bei den Routenparametern kann es sich insbesondere um die Fahrzeit oder die Fahrstrecke auf den Teilrouten handeln. Es ist jedoch auch möglich, die kompletten Zielführungsinformationen bereits in diesem Stadium abzuspeichern, wenn ausreichend Speicherkapazität zur Verfügung steht.

Grenzen die geographische Gebiete, die den Start- und den Zielort enthalten, nicht unmittelbar aneinander, so müssen weitere Datenbanken zu weiteren geographischen Gebieten herangezogen werden, um eine Verbindung zwischen dem Start- und dem Zielort zu ermöglichen. In diesem Fall werden verschiedene Sätze von gemeinsamen Grenzpunkten von Datenbanken zu benachbarten geographischen Gebieten ermittelt. Beispielsweise werden dazu erste Teilrouten zwischen dem Startort und einem ersten Satz von Grenzpunkten ermittelt, die das geographische Gebiet, das den Startort enthält, mit einem benachbarten geographischen Gebiet verbinden. Ebenso werden zweite Teilrouten zwischen dem Zielort und einem zweiten Satz von Grenzpunkten berechnet, die Grenzpunkte zwischen dem geographischen Gebiet, das den Zielort enthält, und einem benachbarten geographischen Gebiet sind. Zusätzlich werden in einem solchen Fall weitere Teilrouten zwischen dem ersten Satz von Grenzpunkten und dem zweiten Satz von Grenzpunkten berechnet. Unter Umständen müssen hierbei, gegebenenfalls auch mehrfach, weitere gemeinsame Grenzpunkte zwischen benachbarten geographischen Gebieten bestimmt werden, zwischen denen Teilrouten berechnet werden.

In einer Weitergestaltung der Erfindung werden erste Teilrouten zwischen dem Startort und allen Grenzpunkten berechnet, die die Datenbank, die den Startort enthält, zu allen weiteren verfügbaren Datenbanken aufweist. Das gleiche gilt für den Zielort. In diesem Fall werden beispielsweise auch bei Fahrten zwischen einem Start und einem Zielort, die in benachbarten Ländern liegen, Fahrtrouten in die Berechnung einbezogen, die Drittländer einbeziehen. Abhängig von der Lage des Start- und Zielortes und dem Grenzverlauf, kann dies zu kürzeren Fahrzeiten führen.

Das Verfahren kann allgemein zur Routenplanung erfolgen, beispielsweise bereits vor Antritt der Fahrt an einem PC, es ist jedoch insbesondere zur Ausführung in einem Navigationssystem für Kraftfahrzeuge vorgesehen, In diesem Fall werden nach dem Auswählen einer Route anhand der Routenparameter zwischen dem Start- und Zielort Zielführungsinformationen ausgegeben. Sind die Datenbanken auf verschiedenen Datenträgern abgespeichert, was bei grenzüberschreitenden Fahrten in der Regel der Fall sein wird, so ist vorzugsweise vorgesehen, daß der Wechsel der Datenträger automatisch erfolgt. Handelt es sich bei den Datenträgern um CD-ROMs, so wird hierbei als Lesegerät ein CD-Wechsler bevorzugt. In diesem Fall entfällt das manuelle Einlegen weiterer CD-ROMs.

Ein erfindungsgemäßes Navigationssystem ist daher dadurch gekennzeichnet, daß das Lesegerät zur Aufnahme von mehreren wechselbaren Datenträgern, sowie zum wahlweisen Auslesen von Daten aus einem der Datenträger ausgebildet ist und die Routenberechnung unter Einbeziehung von Landkartendaten erfolgt, die auf mehreren Datenträgern abgespeichert sind.

Die Erfindung wird nachfolgend anhand von Ausführungsbeispielen und der Zeichnung näher erläutert. Es zeigen:
- Figur 1: ein Ablaufdiagramm eines erfindungsgemäßen Verfahrens
- Figur 2: eine schematische Landkartendarstellung zur Routenberechnung nach dem Ablaufdiagramm gemäß Figur 1
- Figur 3: eine schematische Landkartendarstellung zur Routenberechnung unter Einbeziehung von drei Datenbanken
- Figur 4: eine schematische Landkartendarstellung zur Routenberechnung unter Einbeziehung von vier Datenbanken
- Figur 5: eine schematische Landkartendarstellung zur Routenberechnung bei Fahrt in ein benachbartes Land unter Einbeziehung eines Drittlandes.

In den nachfolgenden Ausführungsbeispielen wird davon ausgegangen, daß die Landkartendaten zu jeweils einem Land in einer Datenbank auf einer CD-ROM abgespeichert sind. Ein geographisches Gebiet ist somit identisch mit einem Land. Dies stellt jedoch keine Beschränkung der Erfindung dar. Vielmehr kann die Erfindung für allgemeine geographische Gebiete eingesetzt werden, die nicht durch Ländergrenzen begrenzt sein müssen.

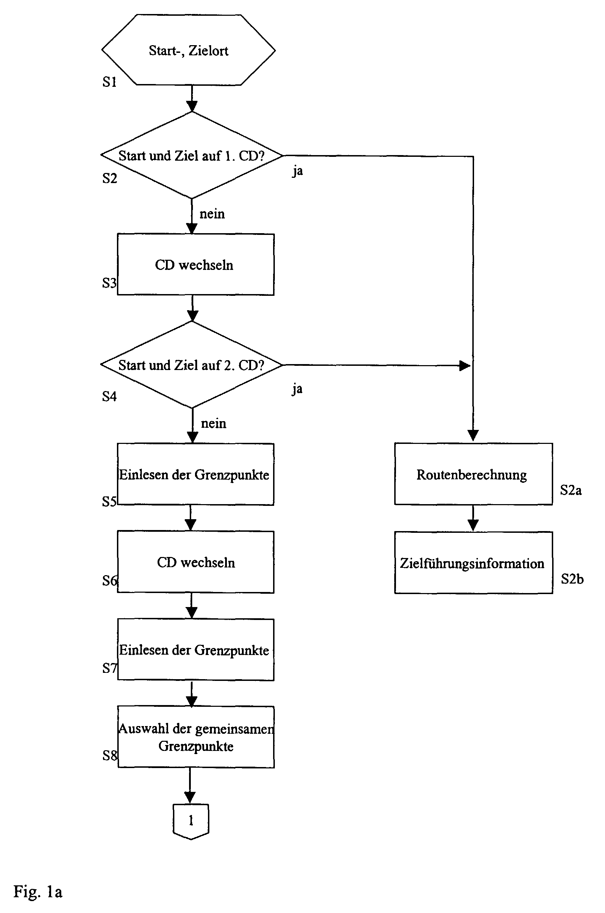

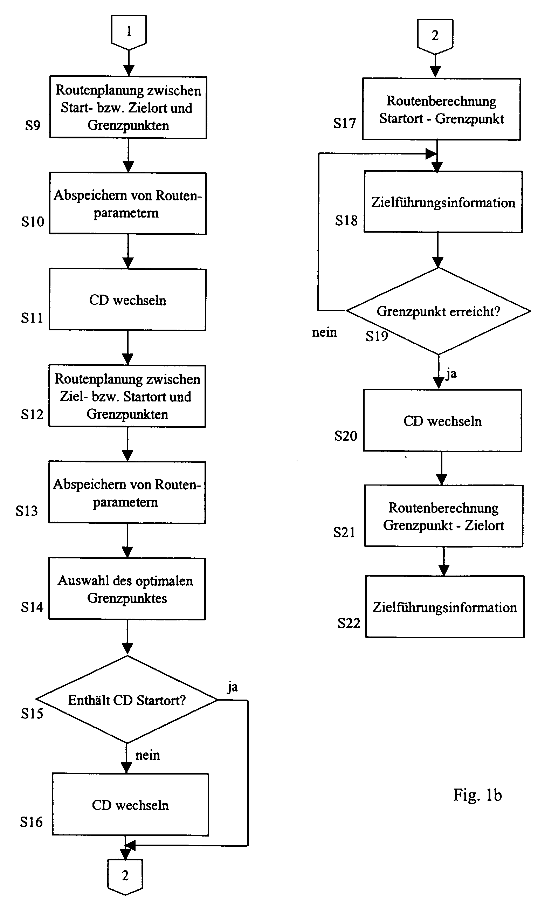

Figur 1 zeigt ein Ablaufdiagramm eines erfindungsgemäßen Verfahrens für eine Routenberechnung über zwei Datenbanken. In Schritt S1 werden der Start- und der Zielort vorgegeben. Dies kann beispielsweise dadurch geschehen, daß beide direkt über eine Eingabeeinheit eingegeben werden, Im Falle eines Navigationssystems ist es jedoch auch möglich, daß der Startort als die gegenwärtige Position des Fahrzeuges automatisch, beispielsweise über Satellitennavigation bestimmt wird und lediglich der Zielort eingegeben oder aus einer Liste ausgewählt wird. In Schritt S2 wird anschließend geprüft, ob der Start- und der Zielort auf der ersten CD-ROM (nachfolgend abgekürzt CD) vorhanden ist. Ist dies der Fall, so kann in Schritt S2a direkt in bekannter Weise die Routenberechnung erfolgen und anschließend werden die Zielführungsinformationen zu der berechneten Route ausgegeben (Schritt S2b). Wird in Schritt S2 festgestellt, daß der Start- und/oder Zielort nicht auf der ersten CD vorhanden ist, so wird die CD gewechselt (Schritt S3) und es wird in Schritt S4 geprüft, ob der Start- und/oder Zielort auf der zweiten CD vorhanden sind. Sind sowohl der Start- und Zielort auf der zweiten CD vorhanden, so erfolgt wie oben bereits beschrieben in Schritt S2a die Routenberechnung und nachfolgend die Ausgabe der Zielführungsinformationen in Schritt S2b.

Die nachfolgende Beschreibung des Verfahrens geht davon aus, daß nur zwei CDs vorhanden sind und daß auf der einen CD der Startort und auf der anderen CD der Zielort abgespeichert ist. Kann zumindest einer dieser Orte auf keiner der beiden CDs gefunden werden, so wird eine Fehlermeldung ausgegeben. Ansonsten werden in Schritt S5 alle Grenzpunkte der zweiten CD in das System eingelesen. Anschließend wird in Schritt S6 die CD gewechselt, so daß nunmehr wiederum die erste CD zur Verfügung steht. Auch von dieser CD werden alle Grenzpunkte eingelesen (Schritt S7). Anschließend werden in Schritt S8 die gemeinsamen Grenzpunkte ausgewählt.

Bei dem in Figur 1 a dargestellten Teilverfahren wird davon ausgegangen, daß in der Mehrzahl der Routenberechnungen der Start- und der Zielort auf einer CD abgespeichert sein werden. Deshalb erfolgt in Schritt S2 bzw. S4 die Abfrage, ob Start- und Zielort auf einer CD vorhanden sind, und zwischen Schritt S2 und S4 wird in Schritt S3 aus Zeitgründen lediglich die CD gewechselt. Alternativ hierzu können auch bereits nach dem Schritt S2 die Grenzpunkte von der ersten CD eingelesen werden. In diesem Falle entfallen die Schritte S5 und S6. Nachteilig ist die etwas längere Zeit zwischen der Ausführung der Schritte S2 und S4.

In Figur 1b ist der weitere Ablauf des Verfahrens nach Auswahl der gemeinsamen Grenzpunkte in Schritt S8 dargestellt. In Schritt S9 erfolgt nunmehr die Routenplanung zwischen dem Start- bzw. Zielort und den Grenzpunkten, je nach dem welcher der beiden Orte auf der gerade aktuell eingelegten CD vorhanden ist. Zu den berechneten Routen werden anschließend in Schritt S10 Routenparameter, wie beispielsweise die Fahrtzeit oder die Fahrtstrecke abgespeichert. Anschließend wird in Schritt S11 die CD gewechselt und in Schritt S12 die Routenplanung zwischen dem Ziel- bzw. Startort und den Grenzpunkten durchgeführt, je nach dem, mit welchem der beiden Orte noch keine Berechnungen erfolgt sind. Auch zu diesen Routen werden in Schritt S13 Routenparameter abgespeichert. Anhand der Routenparameter erfolgt dann die Bestimmung der optimalen Route zwischen dem Start- und dem Zielort und damit auch die Auswahl des optimalen Grenzpunktes (Schritt S14). Anschließend wird in Schritt S15 geprüft, ob die aktuell eingelegte CD den Startort enthält. Ist dies der Fall, so wird in Schritt S17 die Routenberechnung zwischen dem Startort und dem ausgewählten optimalen Grenzpunkt durchgeführt. Enthält in Schritt S15 die CD nicht den Startort, so wird zuvor in Schritt S16 die CD gewechselt. Nach Berechnung der genauen Route zwischen dem Startort und dem Grenzpunkt in Schritt S17 wird anschließend in S18 die Zielführungsinformation an den Fahrzeugführer ausgegeben. In Schritt S19 wird überprüft, ob der Grenzpunkt inzwischen erreicht wurde. Ist dies nicht der Fall, so werden weiterhin die Zielführungsinformationen in Schritt 18 ausgegeben. Wird dagegen in Schritt 19 festgestellt, daß der Grenzpunkt erreicht wurde, so wird anschließend in Schritt S20 die CD gewechselt und in Schritt S21 die Routenberechnung zwischen dem ausgewählten optimalen Grenzpunkt und dem Zielort durchgeführt. Anschließend werden die Zielführungsinformationen für die zweite Teilstrecke zwischen dem Grenzpunkt und dem Zielort ausgegeben.

Weist das Navigationssystem ausreichend Speicherplatz auf, so daß bereits in den Schritten S10 und S13 die komplette Zielführungsinformation als Routenparameter abgespeichert werden kann, so können die Schritte S15 bis S21 entfallen.

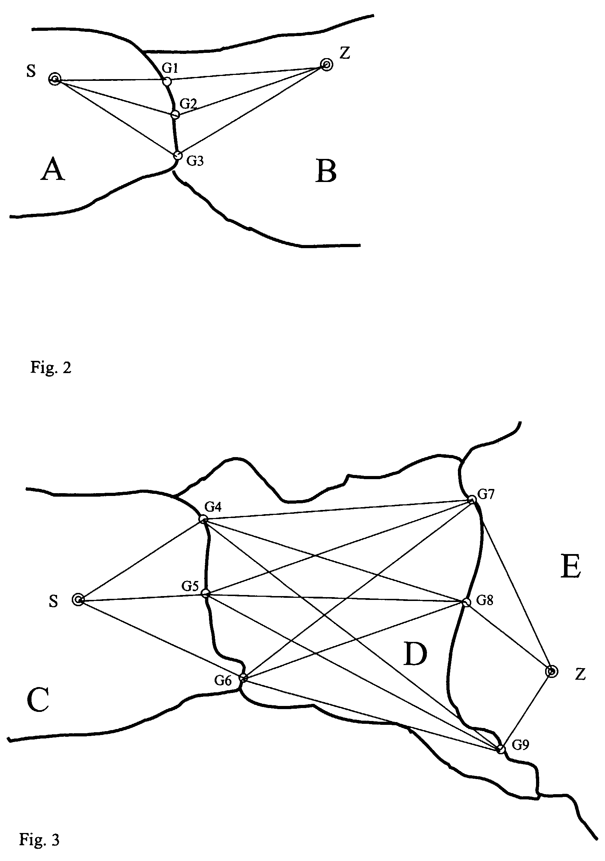

Der in Zusammenhang mit Figur 1 beschriebene Verfahrensablauf wird nachfolgend anhand der Figur 2, die eine schematische Landkartendarstellung aufweist, noch näher erläutert. In Figur 2 sind zwei benachbarte geographisch begrenzte Gebiete, nämlich die Länder A und B, dargestellt. Die Landkartendaten zu jedem der Länder A und B liegen auf einer separaten CD vor. Der Startort S liegt im Land A, während der Zielort Z im Land B liegt. Die Grenzpunkte G1, G2 und G3 sind gemeinsame Grenzpunkte der Länder A und B und somit auch der entsprechenden Datenbanken auf den beiden CDs. In einem ersten Schritt werden erste Teilrouten zwischen dem Startort S und den gemeinsamen Grenzpunkten G1, G2 und G3 berechnet. Zu diesen drei Teilrouten werden als Routenparameter die Fahrzeiten abgespeichert. Anschließend werden mit den Landkartendaten der zweiten CD, die den Zielort Z enthält, die Teilrouten zwischen dem Zielort Z und den gemeinsamen Grenzpunkten G1, G2 und G3 bestimmt. Auch zu diesen drei Teilrouten werden die Routenparameter abgespeichert. Anschließend wird anhand der Routenparameter die optimale Route zwischen dem Startort S und dem Zielort Z bestimmt.

Im dargestellten Fall kann diese zum Beispiel über den Grenzort G1 führen. Daran anschließend wird anhand der Landkartendaten, die den Startort S enthalten, die komplette Route zwischen dem Startort S und dem ausgewählten optimalen Grenzpunkt G1 vollständig berechnet und es werden die entsprechenden Zielführungsinformationen für die Fahrt vom Startort S zum Grenzpunkt G1 ausgegeben. Bei Erreichen des Grenzpunktes G1 wird die CD gewechselt und es wird die komplette Fahrtroute vom Grenzpunkt G1 zum Zielort Z berechnet. Anschließend werden wiederum die Zielführungsinformationen bis zum Erreichen des Zielortes Z ausgegeben.

In Figur 3 ist ein Beispiel dargestellt, bei dem der Startort S und der Zielort Z nicht in benachbarten Ländern liegen. Der Startort S liegt im Land C, während der Zielort Z im Land E liegt, wobei zwischen den Ländern C und E das Land D liegt. Die Landkartendaten zu jedem der Länder C, D, E sind auf einer separaten CD abgespeichert. Zur Berechnung der Route zwischen dem Startort S und dem Zielort Z wird nun so vorgegangen, daß zunächst die Grenzpunkte zwischen den Ländern C und D, das heißt die Grenzpunkte G4, G5 und G6 sowie die Grenzpunkte zwischen den Ländern D und E, das heißt die Grenzpunkte G7, G8 und G9 bestimmt werden. Anschließend werden in einem ersten Schritt Routen zwischen dem Startort S und den Grenzpunkten G4, G5 und G6 berechnet und die Routenparameter zu diesen abgespeichert. In einem zweiten Schritt werden die Routen zwischen dem Zielort Z und den Grenzorten G7, G8 und G9 berechnet und ebenfalls die Routenparameter abgespeichert. Nachfolgend werden weitere Teilrouten zwischen den Grenzorten G4, G5 und G6, die Grenzorte zwischen den Ländern C und D sind, und den Grenzorten G7, G8 und G9, die Grenzorte zwischen den Ländern D und E sind, berechnet. Die Reihenfolge der Berechnung der Teilrouten kann vertauscht werden.

Sofern durch die entsprechenden Informationen in den Datenbanken unterstützt, kann auch ein Luftlinienvektor des Zielortes in Bezug zum Startort ermittelt werden. Aufgrund dieses Vektors kann eine Suchellipse generiert werden, die die Auswahl von Grenzorten räumlich einschränkt. Hierdurch kann eine Beschleunigung des Verfahrens erreicht werden.

Aus den Routenparametern der berechneten Teilrouten wird anschließend die optimale Route, beispielsweise die Route mit der kürzesten Fahrtzeit, vom Startort zum Zielort ausgewählt. Hierdurch werden gleichzeitig die optimalen Grenzorte festgelegt. Beispielsweise kann sich hierbei eine Fahrtroute vom Startort S über dem Grenzpunkt G5 zum Grenzpunkt G8 und von dort zum Zielort Z als optimale Route herausstellen, so daß die Grenzpunkte G5 und G8 hiermit festgelegt sind. Anschließend erfolgt wiederum in einem ersten Schritt eine genaue Routenberechnung vom Startort S zum Grenzpunkt G5 mit den Landkartendaten der CD für das Land C. Bei Erreichen des Grenzpunktes G5 wird anschließend die CD gewechselt und die CD für das Land D eingelegt, so daß eine Routenberechnung vom Grenzpunkt G5 zum Grenzpunkt G8 erfolgen kann. Nach Erreichen des Grenzpunktes G8 wird wiederum die CD gewechselt und nunmehr die CD mit den Landkartendaten des Landes E eingelegt, so daß eine Routenberechnung vom Grenzpunkt G8 zum Zielort Z erfolgen kann.

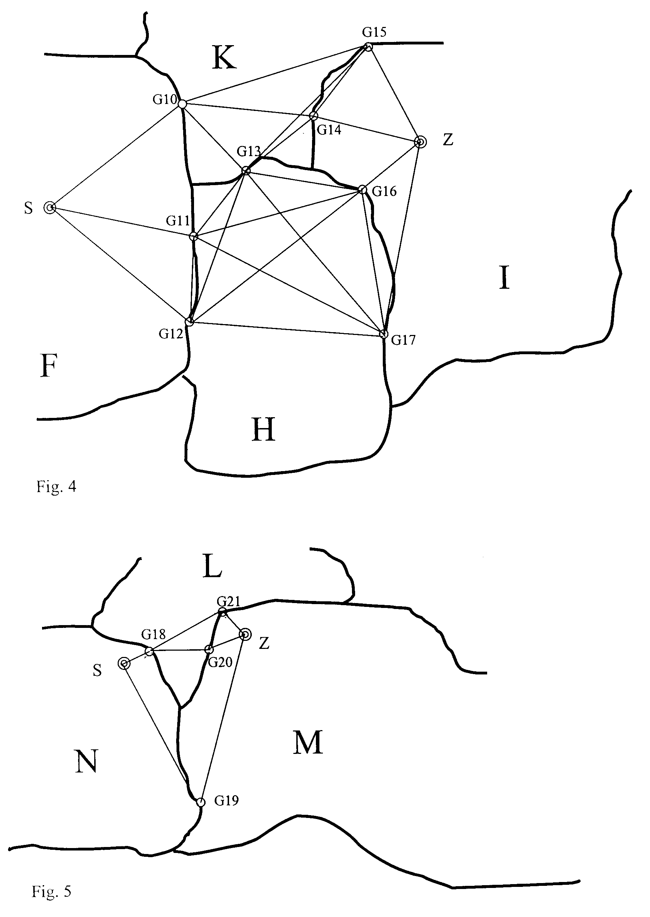

In Figur 4 ist eine Situation dargestellt, bei der Landkartendaten der Routenberechnung zugrundegelegt werden, die für vier verschiedene Länder auf vier verschiedenen CDs abgelegt sind. Es handelt sich hierbei um die Länder F, H, K und I, wobei der Startort S im Land F und der Zielort Z im Land I liegt. Die Länder F und I weisen keine gemeinsame Grenze auf, vielmehr befinden sich zwischen diesen beiden Ländern die Länder K und H. Ausgehend vom Startort S werden nun Routen zu allen Grenzpunkten berechnet, die die Datenbank zum Land F zu allen sonstigen vorhandenen Datenbanken aufweist. In diesem Fall sind dies die Datenbanken für die Länder K und H, so daß die Grenzpunkte G10, G11 und G12 ausgewählt werden. Auch für die Länder K und H werden alle Grenzpunkte zu solchen Ländern ausgewählt, zu denen Datenbankinformationen vorliegen. Im Falle des Landes K sind dies der Grenzpunkt G10 zum Land F, der Grenzpunkt G13 zum Land H und die Grenzpunkte G14 und G15 zum Land I. Im Falle des Landes H sind dies die Grenzpunkte G11 und G12 zum Land F, G13 zu Land K und G16 und G17 zum Land I. Auch für das Land I werden alle Grenzpunkte zu den benachbarten und als Datenbank vorhandenen Ländern ausgewählt. Anschließend werden in einem ersten Schritt erste Teilrouten zwischen dem Startort und allen Grenzpunkten, die das Land des Startortes mit den benachbarten Ländern, zu denen Datenbankinformationen vorliegen, aufweist, berechnet. Dies sind die Routen zwischen dem Startort S und den Grenzpunkten G10, G11 und G12. In gleicher Weise werden für den Zielort zweite Teilrouten zu den Grenzpunkten G14, G15, G16 und G17 berechnet. Zusätzlich werden für die Datenbank zum Land K Teilrouten zwischen den Grenzpunkten G10, G13, G14 und G15, sowie für das Land H Teilrouten zwischen den Grenzpunkten G11, G12, G13, G16 und G17 berechnet. Zu allen Teilrouten werden, wie zuvor bereits beschrieben, entsprechende Routenparameter abgespeichert. Anhand der Routenparameter wird anschließend die optimale Route vom Startort S zum Zielort Z bestimmt, die beispielsweise über die Grenzpunkte G11 und G16 führen kann. Die vollständige Berechnung der Fahrtroute und die Ausgabe der Zielführungsinformationen erfolgt dann in ähnlicher Weise wie in Zusammenhang mit Figur 3 beschrieben mit den Datenbanken zu den Ländern F, H und I.

In Figur 5 ist ein weiteres Beispiel dargestellt, in dem der Startort S und der Zielort Z in benachbarten Ländern, nämlich den Ländern N und M, liegen, die Heranziehung von zusätzlichen Landkartendaten eines Drittlandes jedoch von Vorteil sein kann. Aufgrund der geographischem Situation kann eine Fahrtroute vom Startort S zum Zielort Z durch das Land L über die Grenzpunkte G18 und G20 günstiger sein, als eine Fahrt über die gemeinsame Grenze zwischen den Ländern N und M und den Grenzpunkt G19. Die Auswahl der optimalen Route erfolgt hier aufgrund von drei Datenbanken in ähnlicher Weise wie in Zusammenhang mit Figur 3 beschrieben.

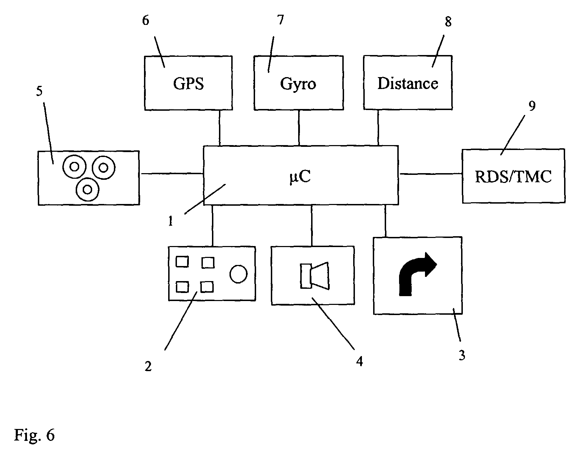

In Figur 6 sind die Komponenten eines Kraftfahrzeug-Navigationssystems zur Durchführung des erfindungsgemäßen Verfahrens schematisch dargestellt. Zentraler Bestandteil des Navigationssystems ist die Recheneinheit 1, die auch die erforderlichen Speicherelemente enthält. Mit der Recheneinheit 1 ist eine Bedieneinheit 2 verbunden, über die beispielsweise der Zielort eingegeben oder ausgewählt werden kann. Die Bedieneinheit 2 kann im gleichen Gehäuse wie die Recheneinheit 1 untergebracht sein, jedoch kann die Bedieneinheit 2 auch als Fernbedienung ausgebildet sein, die mit der Recheneinheit 1 beispielsweise über eine optische Schnittstelle oder eine Funkschnittstelle in Verbindung steht. Mit der Recheneinheit 1 ist eine optische Ausgabeeinheit 3 verbunden, über die Zielführungsinformationen und sonstige Informationen ausgegeben werden. Die Zielführungsinformationen können weiterhin über einen Lautsprecher 4 akustisch ausgegeben werden. Die Recheneinheit 1 ist ferner mit einem Lesegerät 5 verbunden, das die Landkartendaten von einem Datenträger ausliest. Bei dem Datenträger kann es sich beispielsweise um eine CD handeln. In diesem Fall enthält das Navigationssystem als Lesegerät 5 ein CD-Laufwerk. Besonders vorteilhaft ist es, wenn es sich bei dem CD-Laufwerk um einen CD-Wechsler handelt, da dann mehrere CDs eingelegt werden können und die Auswahl der gerade benötigten CD automatisiert erfolgen kann. Die Ansteuerung des Laufwerkes 5 erfolgt dabei durch die Recheneinheit 1. Anhand der Landkartendaten, die auf den CDs abgelegt sind, kann bei bekanntem Start- und Zielort in der zuvor beschriebenen Weise eine Berechnung der optimalen Route durchgeführt werden, zu der dann über die optische Ausgabeeinheit 3 Zielführungsinformationen ausgegeben werden können. Zur Bestimmung der aktuellen Fahrzeugposition enthält das Navigationssystem ferner einen Empfänger 6 zum Empfang von Satellitennavigationssignalen. Um eine von Satelliten unabhängige Positionsbestimmung durchführen zu können, enthält das Navigationssystem ferner einen Richtungssensor 7 und einen Wegsensor 8, die ebenfalls mit der Recheneinheit 1 verbunden sind, so daß mit Hilfe eines geeigneten Computerprogramms mit diesen Signalen eine Positionsbestimmung möglich ist. Ferner ist die Recheneinheit 1 im dargestellten Beispiel zusätzlich mit einem Rundfunkempfänger 9 verbunden, der zum Empfang von RDS/TMC-Signalen ausgebildet ist. Somit können empfangene Verkehrsinformationen vom Rundfunkempfänger 9 an die Recheneinheit 1 weitergeleitet und zur Berücksichtigung bei der Routenberechnung herangezogen werden.

Das erfindungsgemäße Verfahren und ein zur Durchführung des Verfahrens besonders geeignetes Navigationssystem wurden anhand von Ausführungsbeispielen beschrieben. Abwandlungen hierzu sind möglich, ohne den Grundgedanken der Erfindung zu verlassen. Insbesondere ist es möglich, die Reihenfolge der Verfahrensschritte zur Berechnung der einzelnen Teilrouten abzuändern.

## Patentansprüche

1. Verfahren zur Bestimmung einer Fahrtroute für ein Straßenfahrzeug zwischen einem Start- und einem Zielort unter Einbeziehung von mindestens zwei Datenbanken mit Landkartendaten zu benachbarten geographischen Gebieten durch
― Bestimmen von gemeinsamen Grenzpunkten von Datenbanken zu benachbarten geographischen Gebieten
― Berechnen von ersten Teilrouten zwischen dem Startort und den gemeinsamen Grenzpunkten mit den Landkartendaten einer ersten Datenbank, die den Startort enthält
― Abspeichern von Routenparametern zu den ersten Teilrouten
― Berechnen von zweiten Teilrouten zwischen dem Zielort und den gemeinsamen Grenzpunkten mit den Landkartendaten einer zweiten Datenbank, die den Zielort enthält,
― Abspeichern von Routenparametern zu den zweiten Teilrouten,
― Auswählen einer Route zwischen dem Start- und Zielort anhand von Routenparametern der Gesamtroute, die sich aus Routenparametern der Teilrouten ergeben.

2. Verfahren nach Anspruch 1, dadurch gekennzeichnet, daß es sich bei den Routenparametern um die Fahrzeit und/oder die Fahrstrecke handelt.

3. Verfahren nach Anspruch 1 oder 2, dadurch gekennzeichnet, daß es sich bei den Routenparametern auch um Zielführungsinformationen handelt.

4. Verfahren nach Anspruch 1 oder 2, dadurch gekennzeichnet, daß nach dem Auswählen der Route anhand der Routenparameter eine Neuberechnung dieser Route erfolgt.

5. Verfahren nach einem der vorhergehenden Ansprüche, dadurch gekennzeichnet, daß das Verfahren in einem Navigationssystem für Kraftfahrzeuge ausgeführt wird und nach dem Auswählen der Route zwischen dem Start- und Zielort Zielführungsinformationen ausgegeben werden.

6. Verfahren nach einem der vorhergehenden Ansprüche, dadurch gekennzeichnet, daß weitere Datenbanken mit Landkartendaten zu geographischen Gebieten herangezogen werden, die weder den Start- noch den Zielort enthalten, und daß gemeinsame Grenzpunkte zwischen jeweils benachbarten geographischen Gebieten bestimmt werden.

7. Verfahren nach Anspruch 6, dadurch gekennzeichnet, daß die ersten Teilrouten zwischen dem Startort und allen Grenzpunkten berechnet werden, die die Datenbank, die den Startort enthält, zu allen weiteren verfügbaren Datenbanken aufweist.

8. Verfahren nach Anspruch 6 oder 7, dadurch gekennzeichnet, daß die zweiten Teilrouten zwischen dem Zielort und allen Grenzpunkten berechnet werden, die die Datenbank, die den Zielort enthält, zu allen weiteren verfügbaren Datenbanken aufweist.

9. Verfahren nach einem der Ansprüche 6 bis 8, dadurch gekennzeichnet, daß weitere Teilrouten zwischen Grenzpunkten innerhalb einer Datenbank berechnet werden, wobei die Datenbank weder den Start- noch den Zielort enthält.

10. Verfahren nach Anspruch 9, dadurch gekennzeichnet, daß die Grenzpunkte, zwischen denen eine weitere Teilroute berechnet wird, an unterschiedliche weitere Datenbanken anknüpfen.

11. Verfahren nach Anspruch 9 oder 10, dadurch gekennzeichnet, daß die Gesamtroute aus Routenparametern berechnet wird, die sich aus den Routenparametern der ersten, zweiten und weiteren Teilrouten zusammensetzen.

12. Verfahren nach einem der vorhergehenden Ansprüche, dadurch gekennzeichnet, daß die Datenbanken mit den Landkartendaten auf mindestens zwei Datenträgern abgespeichert sind und der Wechsel der Datenträger automatisch erfolgt.

13. Verfahren nach Anspruch 12, dadurch gekennzeichnet, daß die Datenträger CD-ROMs sind und der Wechsel der Datenträger in einem CD-Wechsler erfolgt.

14. Navigationssystem eines Kraftfahrzeugs mit
- einer Recheneinheit (1) zur Berechnung einer Route zwischen einem Start- und einem Zielort,
- einem mit der Recheneinheit (1) verbundenen Lesegerät (5) zum Auslesen von Landkartendaten aus einem Datenträger,
- Mitteln zur Bestimmung der Fahrzeugposition,
- einer mit der Recheneinheit (1) verbundenen Eingabeeinheit (2) und
- einer mit der Recheneinheit (1) verbundenen Ausgabeeinheit (3, 4),
dadurch gekennzeichnet,
daß das Lesegerät (5) zur Aufnahme von mehreren wechselbaren Datenträgern sowie zum wahlweisen Auslesen von Daten aus einem der Datenträger ausgebildet ist und die Routenberechnung unter Einbeziehung von Landkartendaten erfolgt, die auf mehreren Datenträgern abgespeichert sind.

15. Navigationssystem nach Anspruch 14, dadurch gekennzeichnet, daß es sich bei den Datenträgern um CD-ROMs handelt und das Lesegerät als CD-Wechsler ausgebildet ist.
